# FASCICULE DE BREVET EUROPEEN

(11) **EP 2 145 087 B1**
(45) Date de publication et mention de la délivrance du brevet: **05.12.2012**
(21) Numéro de dépôt: 08788172.8
(22) Date de dépôt: 11.04.2008
(51) Int. Cl.: F01N 13/18, F01N 3/28, F01N 3/025, F01N 3/20, F02B 39/00, F02B 37/00

(54) **RACCORD D'UN TURBOCOMPRESSEUR AVEC UN CATALYSEUR D'OXYDATION D'UNE LIGNE D'ECHAPPEMENT D'UN MOTEUR A COMBUSTION INTERNE**
KOPPLUNG EINES TURBOLADERS MIT EINEM OXIDATIONSKATALYSATOR EINER ABGASLEITUNG EINES VERBRENNUNGSMOTORS
COUPLING OF A TURBOCHARGER WITH AN OXIDATION CATALYST OF AN EXHAUST LINE OF AN INTERNAL COMBUSTION ENGINE

(30) Priorité: 14.05.2007 FR 0703452
(43) Date de publication de la demande: 20.01.2010
(73) Titulaire: Renault SAS, 92100 Boulogne Billancourt (FR)
(72) Inventeur: ALIZON, Franck, F-78480 Verneuil-sur-seine (FR); MAESTRONI, Julien-Ange, F-92500 Rueil-malmaison (FR)
(74) Mandataire: Fantin, Teddy
(86) Numéro de dépôt international: PCT/FR2008/050654
(87) Numéro de publication internationale: WO 2008/145886

(56) Documents cités:
- EP-A1- 1 054 139
- WO-A-2005/073530
- DE-A1- 4 436 415
- FR-A- 2 891 305
- US-A- 4 503 680
- US-A- 4 559 776

## Description

### DOMAINE TECHNIQUE AUQUEL SE RAPPORTE L'INVENTION

La présente invention concerne de manière générale la dépollution des gaz brûlés circulant dans une ligne d'échappement d'un moteur à combustion interne.

Elle concerne plus particulièrement un raccord monobloc et rigide qui est apte à raccorder un turbocompresseur avec des moyens d'oxydation d'une ligne d'échappement d'un moteur à combustion interne et qui comporte un conduit d'entrée de gaz brûlés qui s'étend selon un axe d'entrée et un conduit de sortie de gaz brûlés qui s'étend selon un axe de sortie sensiblement orthogonal audit axe d'entrée.

Elle concerne également un moteur à combustion interne comprenant une ligne d'admission de gaz frais qui débouche dans des cylindres d'un bloc moteur et une ligne d'échappement de gaz brûlés qui prend naissance dans les cylindres, la ligne d'échappement comportant une turbine, des moyens d'injection d'agent réducteur et des moyens d'oxydation des gaz brûlés.

L'invention trouve une application particulièrement avantageuse dans la réalisation des moteurs Diesel et des moteurs à allumage commandé fonctionnant à faible richesse.

### ARRIERE-PLAN TECHNOLOGIQUE

Les gaz brûlés des moteurs à combustion interne contiennent de nombreux éléments polluants qu'il convient de traiter ou de filtrer avant de rejeter ces gaz brûlés dans l'atmosphère. On cherche actuellement en particulier à réduire, outre les émissions de monoxyde de carbone et d'hydrocarbures imbrûlés, les émissions de suies polluantes (particules polluantes) et d'oxydes d'azote.

La ligne d'échappement d'un moteur comporte à cet effet un catalyseur d'oxydation suivi, selon la direction d'écoulement des gaz brûlés, d'un filtre à particules.

Le catalyseur d'oxydation est revêtu d'un matériau catalytique destiné à stocker les oxydes d'azote et à permettre, en présence d'oxygène, l'oxydation du monoxyde de carbone et des hydrocarbures imbrûlés. L'accumulation d'oxydes d'azote sur le matériau catalytique diminue l'efficacité du catalyseur d'oxydation.

Le filtre à particules permet quant à lui de filtrer et stocker les particules polluantes. L'accumulation de particules dans le filtre entrave l'évacuation des gaz brûlés, ce qui engendre une surpression des gaz brûlés néfaste au fonctionnement du moteur à combustion interne.

Deux techniques classiques de traitement des particules polluantes et des oxydes d'azote piégés dans le catalyseur et dans le filtre sont connues.

Une première technique consiste, au cours d'une phase de régénération du filtre, à injecter du carburant dans la ligne d'échappement, ce qui entraîne une réaction d'oxydation très exothermique du carburant dans le catalyseur d'oxydation. Les gaz brûlés sortent par conséquent du catalyseur d'oxydation à une température élevée (de l'ordre de 650°C) et entrent dans le filtre à particules en brûlant les particules polluantes qui remplissent ce dernier.

Une seconde technique consiste à traiter les oxydes d'azote en continu, pendant le fonctionnement normal du moteur. A cet effet, on injecte une solution aqueuse d'urée dans la ligne d'échappement, en amont du catalyseur d'oxydation, à l'aide d'un injecteur disposé dans cette ligne d'échappement. Cette solution aqueuse d'urée, au contact des gaz brûlés, se transforme en ammoniac qui réagit dans le catalyseur avec les oxydes d'azote.

Quelle que soit la technique utilisée, il est connu de disposer un injecteur d'agent réducteur (carburant ou urée) au centre d'une conduite de la ligne d'échappement de manière que cet injecteur disperse uniformément l'agent réducteur dans les gaz brûlés. Toutefois, la réalisation de l'injecteur nécessite, pour la tenue thermique de l'injecteur, l'utilisation de matériaux résistants et coûteux.

Une autre solution connue consiste à injecter l'agent réducteur au niveau d'un coude de la ligne d'échappement. Seule l'extrémité de l'injecteur débouche alors dans la conduite, de sorte que le corps de l'injecteur n'est pas soumis à de trop fortes températures.

Toutefois, dans de tels dispositifs, les diamètres des conduites étant généralement faibles, une partie de l'agent réducteur est projetée sur les parois de cette conduite. Cette partie de l'agent réducteur s'écoule alors le long de la conduite en s'évaporant en partie avant d'entrer dans le catalyseur d'oxydation. Le mélange de gaz brûlés et d'agent réducteur n'est donc pas homogène ; au contraire, la majorité de l'agent réducteur évaporé est mélangée aux gaz brûlés qui s'écoulent à proximité des parois de la conduite. Par conséquent, les réactions d'oxydation ont majoritairement lieu à proximité des parois du catalyseur d'oxydation. La température des gaz brûlés est alors moyennement élevée au centre du catalyseur et extrêmement élevée le long de ses parois, ce qui risque d'abîmer et de réduire prématurément les performances de ce catalyseur. Ce problème se répercute en outre de manière identique dans le filtre à particules qui risque de se fissurer. Par ailleurs, les oxydes d'azote et particules piégées aux centres du catalyseur et du filtre ne sont ni traités, ni évacués.

La difficulté consiste par conséquent à maîtriser l'homogénéisation de l'agent réducteur dans les gaz brûlés pour optimiser les réactions d'oxydation et de combustion qui ont lieu dans le catalyseur et dans le filtre à particules.

On connaît du document WO 2006/009056, un dispositif comportant, en amont de l'injecteur, une hélice statique qui provoque la mise en rotation et l'homogénéisation des gaz brûlés dans la conduite. Toutefois, cette pièce intrusive engendre des pertes de charge néfastes au rendement du moteur. La conception et la réalisation d'une telle pièce sont en outre difficiles puisque l'hélice doit présenter une grande tenue à la température et aux vibrations. Une telle hélice augmente sensiblement le coût de la ligne d'échappement qui doit par ailleurs comporter des brides destinées à assurer le maintien de l'hélice. Ces brides génèrent en outre non seulement une augmentation de la masse de la conduite qui, de ce fait, est plus sensible aux vibrations, mais aussi des problèmes de pertes de chaleur. Enfin, une telle hélice doit nécessairement être installée dans une partie droite de la ligne d'échappement, ce qui accroît considérablement l'encombrement de la ligne d'échappement.

On connaît par ailleurs du document FR 2 891 305 une ligne d'échappement de moteur à combustion interne comportant, dans le sens d'écoulement des gaz brûlés, une turbine, un catalyseur et un filtre à particules. Dans ce document, il est prévu, entre la sortie du catalyseur et l'entrée du filtre à particules, un raccord qui permet de mettre en rotation les gaz brûlés. Il est par ailleurs prévu à la sortie de ce raccord un injecteur de carburant pour régénérer le filtre à particules.

### OBJET DE L'INVENTION

Afin de remédier aux inconvénients précités de l'état de la technique, la présente invention propose un raccord de ligne d'échappement générant une homogénéisation efficace des gaz brûlés avec l'agent réducteur, sans pour autant nécessiter l'ajout d'une pièce intrusive.

Plus particulièrement, on propose selon l'invention un raccord tel que défini dans l'introduction, dans lequel les axes d'entrée et de sortie sont situés dans deux plans distincts sensiblement parallèles.

La jonction entre les conduits d'entrée et de sortie est réalisée par l'intermédiaire de deux coudes successifs.

Le flux de gaz brûlés, qui sort de la turbine du turbocompresseur, entre dans le conduit d'entrée du raccord avec une vitesse sensiblement homogène sur toute la section du conduit. Grâce à l'invention, lorsque les gaz brûlés s'engagent dans le premier coude, ils sont déviés vers l'extrados de ce premier coude. Puis, lorsqu'ils s'engagent dans le second coude, ils sont à nouveau déviés de sorte qu'ils présentent un mouvement tourbillonnaire d'axe confondu avec l'axe du conduit de sortie. Ce mouvement tourbillonnaire est communément appelé mouvement de swirl. Le raccord se comporte donc comme un générateur de swirl qui homogénéise le flux de gaz qui le traverse.

Les gaz brûlés et l'agent réducteur étant alors correctement homogénéisés, la quantité de matériaux catalytiques (coûteux) nécessaire dans le catalyseur est réduite. En outre, les durées des intervalles à l'issue desquels il est nécessaire de régénérer le filtre sont accrues. Enfin, par rapport à une ligne d'échappement classique, aucune pièce supplémentaire n'est utilisée pour générer le swirl, si bien que la fiabilité de la ligne d'échappement reste identique.

D'autres caractéristiques avantageuses et non limitatives du raccord selon l'invention sont les suivantes :
- les axes d'entrée et de sortie sont distants l'un de l'autre d'une distance comprise entre 1 et 3 fois le diamètre du conduit d'entrée ;
- il est prévu un conduit intermédiaire qui raccorde les conduits d'entrée et de sortie et qui s'étend selon un axe intermédiaire sensiblement orthogonal auxdits axes d'entrée et de sortie ;
- la jonction entre les conduits d'entrée et intermédiaire forme un premier coude qui comporte un intrados présentant un rayon de courbure inférieur à 0,4 fois le diamètre du conduit d'entrée ;
- la jonction entre les conduits intermédiaire et de sortie forme un second coude qui présente une ligne moyenne dont le rayon de courbure est inférieur à 0,8 fois le diamètre du conduit d'entrée ;
- la jonction entre les conduits d'entrée et intermédiaire formant un premier coude qui comporte un extrados, il est prévu sur ledit extrados des moyens de maintien d'un injecteur d'agent réducteur ;
- il est prévu sur ledit conduit d'entrée des moyens de maintien d'un injecteur d'agent réducteur ;
- les conduits d'entrée et de sortie sont réalisés d'une seule pièce par fonderie ; et
- les conduits d'entrée et de sortie sont réalisés d'une seule pièce par cintrage d'un tube d'acier.

L'invention concerne également un moteur à combustion interne tel que décrit en introduction qui comprend, entre la turbine et les moyens d'oxydation, un tel raccord à l'intérieur duquel débouchent les moyens d'injection d'agent réducteur.

### DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique d'un moteur à combustion interne selon l'invention comportant, sur une ligne d'échappement, un mode de réalisation préférentiel d'un raccord selon l'invention ; et
- les figures 2 et 3 sont des vues du détail de la zone Il de la figure 1, représenté sous deux angles différents.

Dans la description, les termes « amont » et « aval » seront utilisés suivant le sens de l'écoulement des gaz, depuis le point de prélèvement des gaz frais dans l'atmosphère jusqu'à la sortie des gaz brûlés par un pot catalytique 34.

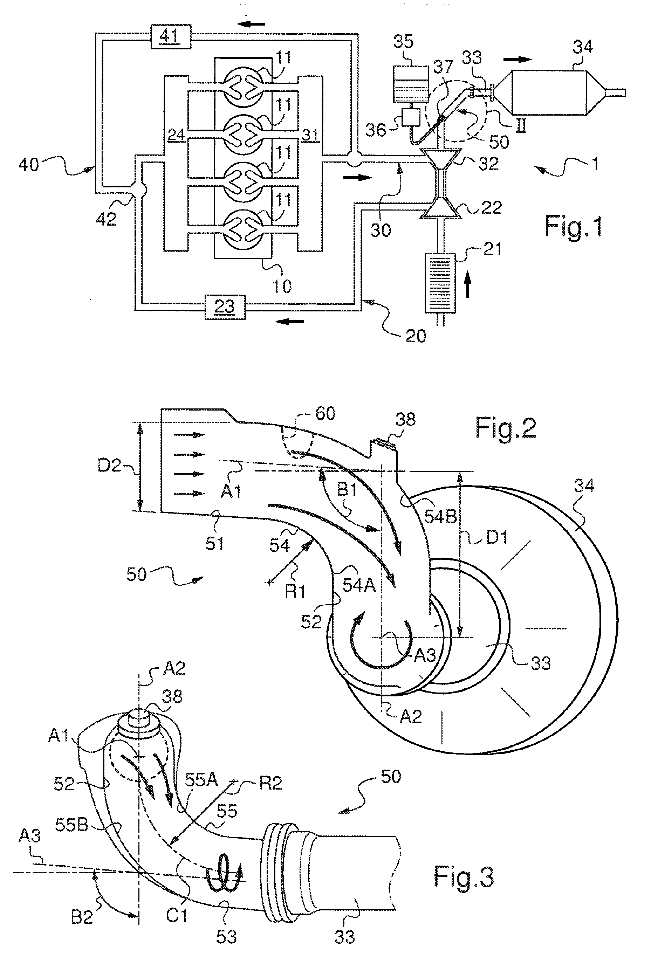

Sur la figure 1, on a représenté schématiquement un moteur à combustion interne 1 de type Diesel, qui comprend un bloc-moteur 10 pourvu ici de quatre cylindres 11.

Classiquement, le moteur à combustion interne 1 comporte un dispositif électronique (non représenté) de pilotage de ses différents organes.

En amont des cylindres 11, le moteur à combustion interne 1 comporte une ligne d'admission 20 qui comporte un filtre à air 21 qui filtre les gaz frais prélevés dans l'atmosphère. Cette ligne d'admission 20 comporte en outre un compresseur 22 qui comprime les gaz frais filtrés par le filtre à air 21, ainsi qu'un refroidisseur d'air principal 23 qui refroidit ces gaz frais comprimés. La ligne d'admission 20 débouche dans un répartiteur d'air 24 qui amène les gaz frais dans chacun des cylindres 11 du bloc-moteur 10.

En sortie des cylindres 11, le moteur à combustion interne 1 comporte un collecteur d'échappement 31 de gaz brûlés qui est raccordé à une ligne d'échappement 30 s'étendant jusqu'à des moyens d'oxydation des gaz brûlés formés ici par le pot catalytique 34. Ce pot catalytique 34 comporte un catalyseur d'oxydation suivi, dans le sens d'écoulement des gaz brûlés, d'un filtre à particules. En variante, le pot catalytique pourrait comporter un filtre à particules catalytique, c'est-à-dire un filtre à particules revêtu intérieurement d'un matériau catalytique.

La ligne d'échappement 30 comporte par ailleurs, en aval du collecteur d'échappement 31, une turbine 32 qui actionne le compresseur 22. Elle comporte également un raccord 50 qui s'étend à partir de la sortie de la turbine 32 jusqu'à un flexible d'entrée 33 du pot catalytique 34.

La ligne d'échappement 30 comporte en outre des moyens d'injection d'un agent réducteur dans le raccord 50. Ces moyens d'injection comprennent un réservoir 35 d'agent réducteur, une pompe 36 qui pompe l'agent réducteur dans le réservoir 35, et un injecteur 37 qui est apte à injecter l'agent réducteur sous pression à l'intérieur du raccord 50.

L'agent réducteur utilisé est ici du carburant. En variante, il pourrait être constitué par une solution aqueuse d'urée apte, au contact des gaz brûlés, à se transformer en ammoniac pour réduire les oxydes d'azote compris dans les gaz brûlés.

Quoi qu'il en soit, le moteur à combustion interne 1 comporte également une ligne de recirculation EGR 40 des gaz brûlés, appelés gaz de recirculation. Cette ligne de recirculation EGR 40 accueille un refroidisseur EGR 41 prévu pour refroidir les gaz de recirculation et une vanne EGR 42 de régulation du débit de gaz de recirculation. La ligne de recirculation EGR 40 prend naissance dans la ligne d'échappement 30, entre le collecteur d'échappement 31 et l'entrée de la turbine 32, et débouche dans la ligne d'admission 20, entre le refroidisseur d'air principal 23 et le répartiteur d'air 24.

Le dispositif électronique de pilotage du moteur comporte en outre deux capteurs de température (non représentés) situés aux entrées du catalyseur et du filtre à particules, ainsi que deux capteurs de pression (non représentés) situés aux entrée et sortie du filtre à particules.

Comme le montrent les figures 2 et 3, le raccord 50 comporte un conduit d'entrée 51 raccordé à la sortie de la turbine 32 au moyen par exemple d'une bride de fixation, ainsi qu'un conduit de sortie 53 emmanché dans le flexible d'entrée 33 du pot catalytique 34.

Selon une caractéristique essentielle de ce raccord 50, les axes A1, A3 des conduits d'entrée 51 et de sortie 53 sont situés dans deux plans distincts sensiblement parallèles. Ils sont distants l'un de l'autre d'une distance D1 comprise entre 1 et 3 fois le diamètre D2 du conduit d'entrée 51.

L'axe d'entrée A1 du conduit d'entrée 51 s'étend dans l'axe de la sortie de la turbine 32. Le conduit d'entrée 51 présente ici une section sensiblement circulaire de diamètre égal à 50 millimètres. En variante, si la ligne d'échappement était pourvue d'un dispositif de court-circuitage de la turbine (communément appelé dispositif de « waste-gate ») comportant un conduit de dérivation, le conduit d'entrée pourrait comporter une ouverture latérale dans laquelle déboucherait ce conduit de dérivation.

Avantageusement, un conduit intermédiaire 52 joint le conduit d'entrée 51 au conduit de sortie 53.

Le conduit intermédiaire 52 s'étend selon un axe intermédiaire A2 sensiblement othogonal audit axe d'entrée A1. On entend ici par sensiblement orthogonal le fait que les axes d'entrée A1 et intermédiaire A2 forment ensemble un angle B1 compris entre 75 et 105 degrés. La jonction de ce conduit intermédiaire 52 avec le conduit d'entrée 51 forme alors un premier coude 54.

L'axe de sortie A3 du conduit de sortie 53 s'étend quant à lui dans l'axe du flexible d'entrée 33 du pot catalytique 34, sensiblement orthogonalement auxdits axes d'entrée A1 et intermédiaire A2. On entend ici également par sensiblement orthogonalement le fait que les axes intermédiaire A2 et de sortie A3 forment un angle B2 compris entre 75 et 105 degrés. La jonction de ce conduit de sortie 53 avec le conduit intermédiaire 52 forme alors un second coude 55.

De ce fait, les axes d'entrée A1 et de sortie A3 sont situés dans deux plans distincts sensiblement parallèles et distants l'un de l'autre, au niveau de l'axe intermédiaire A2, d'une distance D1 égale à 80 millimètres.

Chaque coude 54, 55 présente une ligne moyenne en arc de cercle, un intrados 54A, 55A et un extrados 54B, 55B. On appelle intrados la portion de la face intérieure du raccord 50, qui est située à l'intérieur du coude et qui est convexe. On appelle extrados la portion de la face intérieure du raccord 50, qui est située à l'extérieur du coude et qui est concave. La face intérieure du raccord 50 est continue et ne comporte aucun obstacle à la circulation du flux de gaz brûlés.

Le conduit d'entrée 51 comporte des moyens de maintien 38 de l'injecteur 37. Ces moyens de maintien comprennent une ouverture réalisée dans l'extrados 54B du premier coude 54, et une couronne d'axe sensiblement parallèle à l'axe intermédiaire A2, qui borde l'ouverture. L'injecteur 37 peut donc être engagé dans cette couronne, de manière à injecter le flux d'agent réducteur selon un cône d'injection d'axe sensiblement parallèle à l'axe intermédiaire A2.

En variante, les moyens de maintien peuvent être situés dans le conduit d'entrée 51. Dans cette variante, l'injecteur comporte un nez d'injection présentant une extrémité coudée située au centre du conduit d'entrée, parallèlement à l'axe d'entrée. De ce fait, dans cette variante, l'injecteur est apte à injecter le flux d'agent réducteur selon un cône d'injection d'axe confondu avec l'axe d'entrée.

Eventuellement, le conduit d'entrée 51 peut comporter des moyens de maintien d'une sonde de température ou de pression ou de richesse (représentée en pointillés sur la figure 2), dont le nez 60 débouche à l'intérieur du conduit d'entrée.

Avantageusement, l'intrados 54A du premier coude 54 présente un rayon de courbure R1 inférieur à 20 millimètres (ici 18 millimètres).

Préférentiellement, en particulier si une sonde de température ou de pression débouche dans le conduit d'entrée 51, la ligne moyenne C1 du second coude 55 présente un rayon de courbure R2 inférieur à 40 millimètres (ici 35 millimètres).

Le raccord 50 est monobloc et rigide. Il est réalisé d'une seule pièce par fonderie ou par cintrage d'un tube d'acier de diamètre intérieur ici égal à 50 millimètres.

Lorsque le moteur fonctionne, les gaz brûlés issus de la combustion des gaz frais et du carburant au sein des cylindres 11 circulent dans la ligne d'échappement 30 pour être traités dans le pot catalytique 34 avant d'être rejetés dans l'atmosphère.

En continu ou à intervalles réguliers, les moyens électroniques de pilotage du moteur commandent l'injection d'agent réducteur dans le raccord 50. Cette injection peut en particulier débuter lorsque la différence de pressions mesurée entre l'entrée et la sortie du filtre à particules dépasse une première valeur seuil prédéterminée, ce qui signifie en effet que le filtre est encrassé et doit être régénéré.

Les gaz brûlés qui sortent de la turbine 32 s'engouffrent alors dans le conduit d'entrée 51 du raccord 50. A ce stade, ils présentent une vitesse sensiblement homogène en chaque section de ce conduit.

Lorsque les gaz brûlés atteignent le premier coude 54, le faible rayon de courbure de l'intrados 54A de ce premier coude 54 génère un décollement brusque de ces gaz brûlés vers l'extrados 54B de ce coude. En présence d'une sonde dans le conduit d'entrée 51, la vitesse des gaz brûlés augmente dans ce conduit d'entrée, si bien que ce décollement peut être plus tardif. Quoi qu'il en soit, les gaz brûlés qui circulent dans le conduit intermédiaire 52 ne présentent plus une vitesse homogène. Au contraire, ils présentent une vitesse plus importante du côté du prolongement de l'extrados 54B du premier coude 54 que du côté du prolongement de l'intrados 54A de ce premier coude.

Lors de leur passage dans le premier coude 54, les gaz brûlés se mêlent au carburant injecté par l'injecteur 37, sans que le mélange soit toutefois parfaitement homogène.

La faible longueur du conduit intermédiaire 52 ne laisse pas au flux de gaz brûlés le temps de revenir du côté du prolongement de l'intrados 54A du premier coude 54. Par conséquent, le mélange de gaz brûlés et de carburant arrive dans le second coude 55 tangentiellement au conduit de sortie 53. Cette arrivée tangentielle génère un mouvement tourbillonnaire des gaz brûlés dans le conduit de sortie 53 autour de l'axe de sortie A3, appelé mouvement de swirl. Grâce au faible rayon de courbure du second coude, cette mise en rotation des gaz brûlés est efficace même si le décollement du flux dans le premier coude a été tardif. Le mouvement tourbillonnaire favorise alors l'homogénéisation du mélange dans le conduit de sortie 53 et dans le flexible d'entrée 33, si bien que le mélange est parfaitement homogène lorsqu'il entre dans le pot catalytique 34.

La présence d'un taux élevé de carburant dans le mélange entraîne une réaction d'oxydation très exothermique du carburant dans l'ensemble du catalyseur d'oxydation. Les gaz brûlés sortent par conséquent du catalyseur d'oxydation à une température élevée et entrent dans le filtre à particules en brûlant l'ensemble des particules polluantes qui remplissent ce dernier. Ainsi, le filtre à particules est régénéré efficacement.

Enfin, lorsque la différence de pressions mesurée entre l'entrée et la sortie du filtre à particules redevient inférieure à une seconde valeur seuil prédéterminée, l'injection de carburant dans le raccord 50 est stoppée.

## Revendications

1. Raccord (50) monobloc et rigide d'un turbocompresseur (30) avec des moyens d'oxydation (34) d'une ligne d'échappement (30) d'un moteur à combustion interne (1), comportant :
- un conduit d'entrée (51) de gaz brûlés qui s'étend selon un axe d'entrée (A1),
- un conduit de sortie (53) de gaz brûlés qui s'étend selon un axe de sortie (A3) sensiblement orthogonal audit axe d'entrée (A1), les axes d'entrée (A1) et de sortie (A3) étant situés dans deux plans distincts sensiblement parallèles.
- un conduit intermédiaire (52) qui raccorde les conduits d'entrée (51) et de sortie (53), et qui forme à sa jonction avec le conduit d'entrée (51) un premier coude (54) présentant un extrados (54B), et
- des moyens de maintien (38) d'un injecteur (37) d'agent réducteur, Situés sur ledit conduit d'entrée (51) ou sur ledit extrados (54B).

2. Raccord (50) selon la revendication précédente, dans lequel les axes d'entrée (A1) et de sortie (A3) sont distants l'un de l'autre d'une distance (D1) comprise entre 1 et 3 fois le diamètre (D2) du conduit d'entrée (51).

3. Raccord (50) selon l'une des revendications précédentes, dans lequel le conduit intermédiaire (52) s'étend selon un axe intermédiaire (A2) sensiblement orthogonal auxdits axes d'entrée (A1) et de sortie (A3).

4. Raccord (50) selon la revendication précédente, dans lequel le premier coude (54) comporte un intrados (54A) présentant un rayon de courbure (R1) inférieur à 0,4 fois le diamètre (D2) du conduit d'entrée (51).

5. Raccord (50) selon l'une des deux revendications précédentes, dans lequel la jonction entre les conduits intermédiaire (52) et de sortie (53) forme un second coude (55) qui présente une ligne moyenne (C1) dont le rayon de courbure (R2) est inférieur à 0,8 fois le diamètre (D2) du conduit d'entrée (51).

6. Raccord (50) selon l'une des revendications précédentes, dans lequel les conduits d'entrée (51) et de sortie (53) sont réalisés d'une seule pièce par fonderie.

7. Raccord (50) selon l'une des revendications précédentes, dans lequel les conduits d'entrée (51) et de sortie (53) sont réalisés d'une seule pièce par cintrage d'un tube d'acier.

8. Moteur à combustion interne (1) comprenant une ligne d'admission (20) de gaz frais qui débouche dans des cylindres (11) d'un bloc moteur (10) et une ligne d'échappement (30) de gaz brûlés qui prend naissance dans les cylindres (11), la ligne d'échappement (30) comportant une turbine (32), des moyens d'injection (35, 36, 37) d'agent réducteur et des moyens d'oxydation (34) des gaz brûlés, **caractérisé en ce que** la ligne d'échappement (30) comporte, entre la turbine (32) et les moyens d'oxydation (34), un raccord (50) selon l'une des revendications précédentes dans lequel débouchent les moyens d'injection (35, 36, 37) d'agent réducteur.

## Claims

1. One-piece and rigid coupling (50) between a turbocharger (30) and oxidation means (34) of an exhaust line (30) of an internal combustion engine (1), comprising:
- a burnt gases inlet pipe (51) which extends along an inlet axis (A1),
- a burnt gases outlet pipe (53) which extends along an outlet axis (A3) substantially orthogonal to said inlet axis (A1), the inlet (A1) and outlet (A3) axes being situated in two separate but substantially parallel planes,
- an intermediate pipe (52) which couples the inlet (51) and outlet (53) pipes and which at its junction with the inlet pipe (51) forms a first elbow (54) having an extrados (54B), and
- means (38) for retaining a reducing-agent injector (37) which are situated on said inlet pipe (51) or on said extrados (54B).

2. Coupling (50) according to the preceding claim, in which the inlet (A1) and outlet (A3) axes are separated from one another by a distance (D1) of between 1 and 3 times the diameter (D2) of the inlet pipe (51).

3. Coupling (50) according to either of the preceding claims, in which the intermediate pipe (52) extends along an intermediate axis (A2) substantially orthogonal to said inlet (A1) and outlet (A3) axes.

4. Coupling (50) according to the preceding claim, in which the first elbow (54) comprises an intrados (54A) that has a radius of curvature (R1) less than 0.4 times the diameter (D2) of the inlet pipe (51).

5. Coupling (50) according to either of the two preceding claims, in which the junction between the intermediate (52) and outlet (53) pipes forms a second elbow (55) which has a mid-line (C1) whose radius of curvature (R2) is less than 0.8 times the diameter (D2) of the inlet pipe (51).

6. Coupling (50) according to one of the preceding claims, in which the inlet (51) and outlet (53) pipes are created as a single piece by casting.

7. Coupling (50) according to one of the preceding claims, in which the inlet (51) and outlet (53) pipes are created as a single piece by bending a steel tube.

8. Internal combustion engine (1) comprising a fresh gas intake line (20) which opens into the cylinders (11) of an engine block (10) and a burnt gases exhaust line (30) which originates in the cylinders (11), the exhaust line (30) comprising a turbine (32), means (35, 36, 37) of injecting a reducing agent and means (34) of oxidizing the burnt gases, **characterized in that** the exhaust line (30) comprises, between the turbine (32) and the oxidation means (34), a coupling (50) according to one of the preceding claims into which the means (35, 36, 37) of injecting a reducing agent open.

## Patentansprüche

1. Einstückige und steife Verbindung (50) eines Turboladers (30) mit Oxidationseinrichtungen (34) einer Auspuffleitung (30) eines Verbrennungsmotors (1), die aufweist:
- einen Rauchgas-Eingangskanal (51), der sich gemäß einer Eingangsachse (A1) erstreckt,
- einen Rauchgas-Ausgangskanal (53), der sich gemäß einer Ausgangsachse (A3) im Wesentlichen orthogonal zur Eingangsachse (A1) erstreckt, wobei die Eingangs- (A1) und Ausgangsachsen (A3) sich in zwei im Wesentlichen parallelen getrennten Ebenen befinden,
- einen Zwischenkanal (52), der die Eingangs-(51) und Ausgangskanäle (53) verbindet, und der an seiner Verbindungsstelle mit dem Eingangskanal (51) eine erste Krümmung (54) formt, die eine Oberseite (54B) aufweist, und
- Halteeinrichtungen (38) eines Reduktionsmittelinjektors (37), die sich auf dem Eingangskanal (51) oder auf der Oberseite (54B) befinden.

2. Verbindung (50) nach dem vorhergehenden Anspruch, bei der die Eingangs- (A1) und Ausgangsachsen (A3) zueinander einen Abstand (D1) haben, der zwischen dem Einfachen und dem Dreifachen des Durchmessers (D2) des Eingangskanals (51) liegen.

3. Verbindung (50) nach einem der vorhergehenden Ansprüche, bei der der Zwischenkanal (52) sich gemäß einer Zwischenachse (A2) im Wesentlichen orthogonal zu den Eingangs- (A1) und Ausgangsachsen (A3) erstreckt.

4. Verbindung (50) nach dem vorhergehenden Anspruch, bei der die erste Krümmung (54) eine Unterseite (54A) aufweist, die einen Krümmungsradius (R1) aufweist, der kleiner als 0,4 Mal der Durchmesser (D2) des Eingangskanals (51) ist.

5. Verbindung (50) nach einem der zwei vorhergehenden Ansprüche, bei der die Verbindungsstelle zwischen dem Zwischenkanal (52) und dem Ausgangskanal (53) eine zweite Krümmung (55) formt, die eine Mittellinie (C1) aufweist, deren Krümmungsradius (R2) kleiner als 0,8 Mal der Durchmesser (D2) des Eingangskanals (51) ist.

6. Verbindung (50) nach einem der vorhergehenden Ansprüche, bei der der Eingangs- (51) und der Ausgangskanal (53) aus einem Stück durch Gießen hergestellt werden.

7. Verbindung (50) nach einem der vorhergehenden Ansprüche, bei der der Eingangs- (51) und der Ausgangskanal (53) aus einem Stück durch Biegen eines Stahlrohrs hergestellt werden.

8. Verbrennungsmotor (1), der eine Frischgas-Ansaugleitung (20), die in Zylinder (11) eines Motorblocks (10) mündet, und eine Auspuffleitung (30) von Rauchgasen enthält, die in den Zylindern (11) beginnt, wobei die Auspuffleitung (30) eine Turbine (32), Reduktionsmittel-Injektionseinrichtungen (35, 36, 37) und Oxidationseinrichtungen (34) der Rauchgase aufweist, **dadurch gekennzeichnet, dass** die Auspuffleitung (30) zwischen der Turbine (32) und den Oxidationseinrichtungen (34) eine Verbindung (50) nach einem der vorhergehenden Ansprüche aufweist, in die die Reduktionsmittel-Injektionseinrichtungen (35, 36, 37) münden.
